Europäisches Patentamt

European Patent Office

Office européen des brevets

(11) Veröffentlichungsnummer: **0 226 573**
A2

## (12) EUROPÄISCHE PATENTANMELDUNG

(21) Anmeldenummer: 86890338.6

(22) Anmeldetag: 15.12.86

(51) Int. Cl.⁴: **F 16 L 37/24**
**F 16 L 27/06**

(30) Priorität: 16.12.85 AT 3624/85

(43) Veröffentlichungstag der Anmeldung:
24.06.87 Patentblatt 87/26

(84) Benannte Vertragsstaaten:
**DE ES FR GB IT**

(71) Anmelder: **Röhren- und Pumpenwerk Rudolf Bauer Aktiengesellschaft**

**A-8570 Voitsberg(AT)**

(72) Erfinder: **Stiasny, Ernst, Dipl.-Ing.**
**August-Jaksch-Strasse 12**
**A-9020 Klagenfurt(AT)**

(74) Vertreter: **Piso, Eberhard, Dr. et al,**
**Patentanwälte Dipl.-Ing. Herbert C.E. Krause Dr. Eberhard Piso Gluckgasse 1 Fach 328**
**A-1010 Wien 1(AT)**

(54) **Rohrschnellkupplung.**

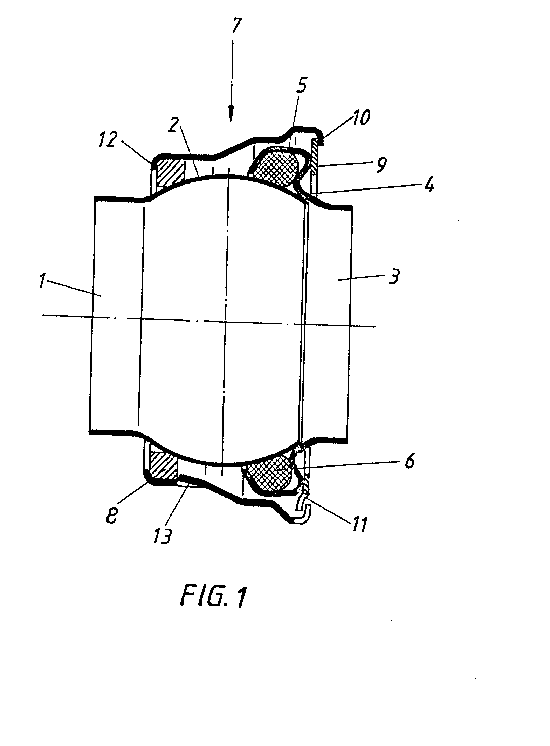

(57) Rohrschnellkupplung aus einem oder mehreren Kupplungselementen, mit einem Dichtring, zum Verbinden eines als umschließenden, vorzugsweise becherförmigen Teil, und eines als umschlossenen, vorzugsweise kugelförmigen Teil, ausgebildeten Rohrendes, wobei ein oder beide Kupplungselemente (7,9) einen größeren Kleinstdurchmesser aufweist(t)(en) als das den kleineren Größtaußendurchmesser aufweisende kugelförmige Rohrende (2) des Rohres (1) und somit über dieses schiebbar ist (sind), und wenigstens eines der Kupplungselemente (7,9) über einen Stützring (8,8'), dessen Kleinstdurchmesser kleiner als der Außendurchmesser des mit ihm zu versehenden kugelförmigen und/oder becherförmigen Rohrendes (2,4) und dessen Außendurchmesser größer als der Kleinstdurchmesser der(s) Kupplungselemente(s) (7,9) ist, im gekuppelten Zustand mit dem Rohrende (2,4) verbunden ist (sind) (Figur 1).

FIG. 1

EP 0 226 573 A2

Die Erfindung betrifft eine Rohrschnellkupplung aus einem oder mehreren Kupplungselementen, mit einem Dichtring, zum Verbinden eines als umschließenden, vorzugsweise becherförmigen Teil, und eines als umschlossenen, vorzugsweise kugelförmigen Teil ausgebildeten Rohrendes.

Kupplungen dieser Bauart sind von früher her bekannt, beispielsweise wie in der AT-PS 169 959 beschrieben. Allen bekannten Schnellkupplungen ist allerdings gemeinsam, daß die Kupplungselemente, also die die beiden Rohrenden verbindenden Teile an einem oder beiden Rohrenden fix montiert sind. Derartige Ausbildungsformen bedingen natürlich ein verhältnismäßig großes Transportvolumen und verursachen Schwierigkeiten beim Verzinken (so müssen beispielsweise beim Abkühlen die Kupplungselemente ständig bewegt werden, um beim Erstarren des Zinks nicht am Rohr festzulöten). Ein weiterer Nachteil liegt in den nicht zu übersehenden Schwierigkeiten beim Austausch defekter Kupplungselemente. Aufgabe der Erfindung ist es daher, eine Rohrschnellkupplung zu schaffen, welche die oben erwähnten Nachteile beseitigt, indem sie eine Verbindung bietet, bei welcher die Kupplungselemente nachträglich über die Rohrenden aufbringbar sind.

Die Erfindung löst die Aufgabe dadurch, daß ein oder beide Kupplungselemente einen größeren Kleinstdurchmesser aufweis(t)(en) als das den kleineren Größtaußendurchmesser aufweisende kugelförmige Rohrende des Rohres und somit über dieses schiebbar ist (sind), und daß wenigstens eines der Kupplungselemente über einen Stützring, dessen Kleinstdurchmesser kleiner als der Außendurchmesser des mit ihm zu versehenden kugelförmigen und/oder becherförmigen Rohrendes und dessen Außendurchmesser größer als der Kleinstdurchmesser der(s) Kupplungselemente(s) ist, im gekuppelten Zustand mit dem Rohrende verbunden ist (sind).

Ein anderes Merkmal der Erfindung ist es, daß das Kupplungselement, wie an sich bekannt, glockenförmig ausgebildet ist. Ein weiteres Merkmal der Erfindung ist es, daß das Kupplungselement ein Formring ist, der insbesondere seitengleich ausgebildet ist, daß der Formring an seinem äußeren Umfang Kupplungssegmente aufweist, und daß die Kupplungssegmente abstandsgleich angeordnet sind.

Ein weiteres Merkmal der Erfindung ist es, daß der Formring mit dem becherförmigen Rohrende über eine Rippen-Nut-Konstruktion verbunden ist.

Ein weiteres, anderes Merkmal der Erfindung ist es, daß der Formring mit dem becherförmigen Rohrende einstückig ausgebildet ist.

Eine andere Ausbildung der Erfindung ist dadurch gegeben, daß das Kupplungselement ein mit Haken versehener Ring ist.

Ein weiteres Merkmal der Erfindung ist es, daß der Stützring innerhalb des Kupplungselementes mittels Sperrelementen festgehalten ist, daß der Stützring mehrteilig ausgebildet ist, und daß das Sperrelement als Nut ausgebildet ist.

Der Gegenstand der Erfindung wird im folgenden an Hand zweier, in den angeschlossenen Zeichnungen dargestellter Ausführungsbeispiele näher beschrieben.

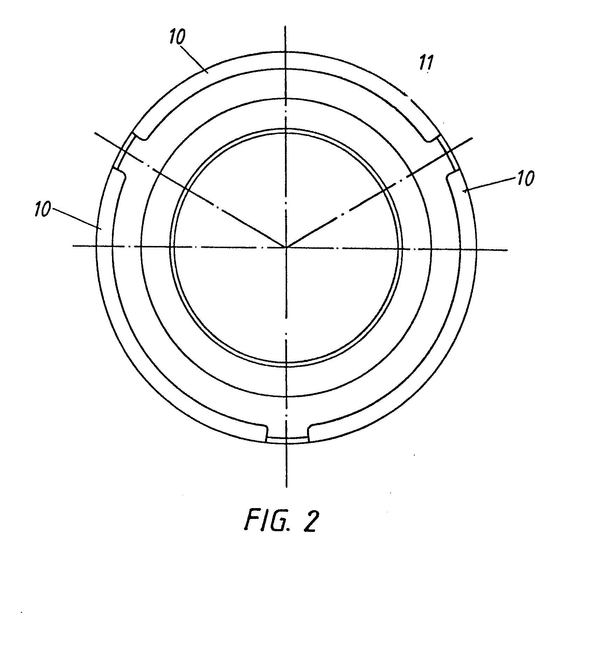

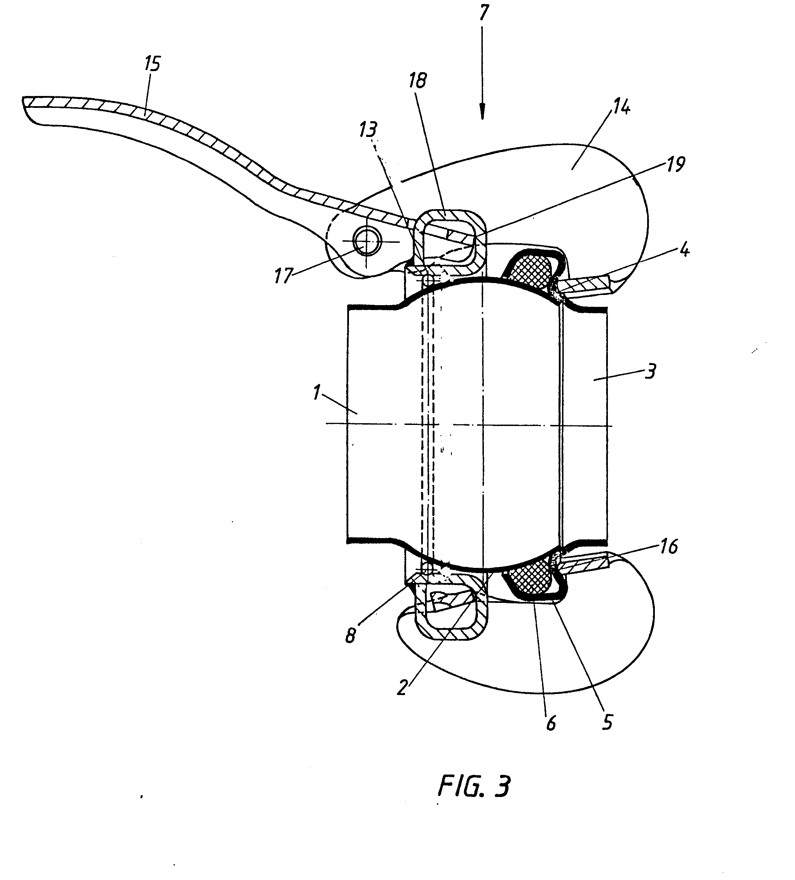

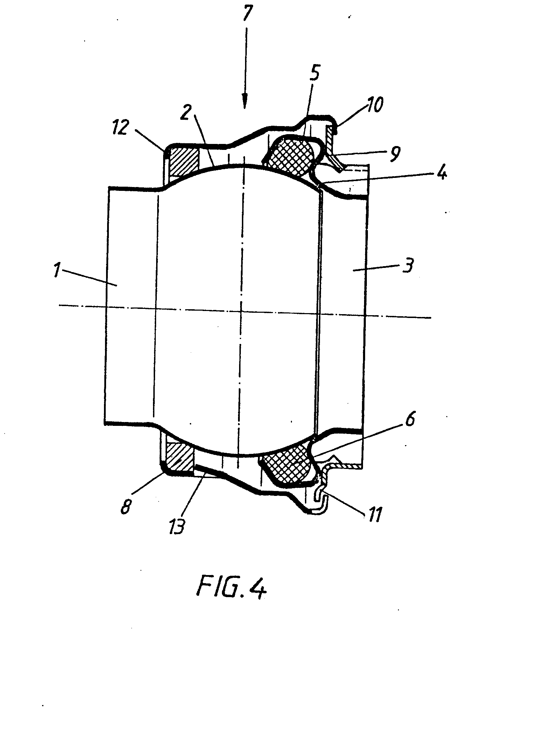

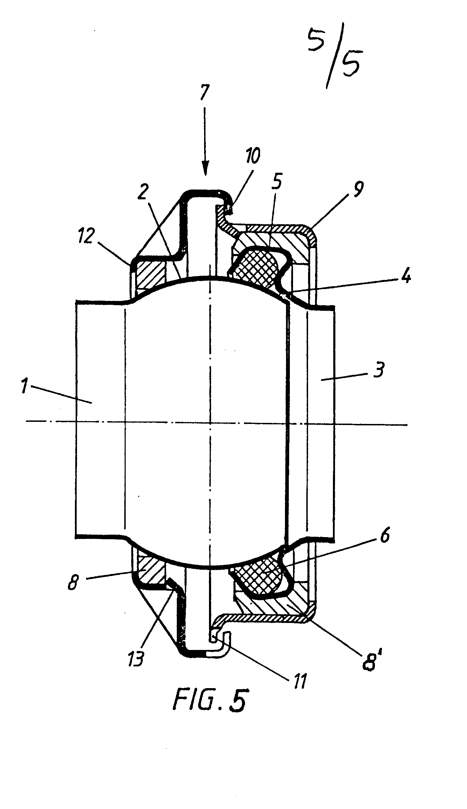

Es zeigen Fig.1 einen Längsschnitt durch die erfindungsgemäße Rohrschnellkupplung mit einem Bajonettverschluß; Fig.2 eine Ansicht in Achsrichtung der Ausbildung nach Fig.1 mit vorne liegendem Formring; Fig.3 einen Längsschnitt durch die erfindungsgemäße Rohrschnellkupplung mit einem Hebelverschluß; Fig.4 eine Ausführung entsprechend Fig.1 mit einer Formring-Stützring-Kombination; und Fig.5 eine Ausführung entsprechend Fig.1, wobei der Formring über eine Rippen-Nut-Konstruktion mit dem becherförmigen Rohrende verbunden ist.

Das an das Rohr 3 anschließende becherförmige Rohrende 4 ist passend für die Aufnahme des an das Rohr 1 anschließenden kugelförmigen Rohrendes 2 ausgestaltet.

Das becherförmige Rohrende 4 hat eine ringförmig umlaufende Ausbuchtung 5, in welcher als Dichtelement ein Dichtring 6 aus Gummi oder jedem anderen geeigneten Material liegt.

Zum Verbinden der beiden Rohre 1 und 3 wird das Kupplungselement 7 über das kugelförmige Rohrende 2 bis über das Rohr 1 geschoben. Dies ist deshalb möglich, weil der kleinste Innendurchmesser des Kupplungselementes 7 in der Ausbildung nach Fig.1 am ringförmigen Konturabschnitt 12 größer als der Außendurchmesser des kugelförmigen Rohrendes 2 ist.

Danach wird der Stützring 8, hier aus federndem Kunststoff mit einem Querschlitz, in gleicher Weise aufgebracht und soweit in das Kupplungselement 7 eingeschoben, bis er am Konturabschnitt 12 anliegt und von Sperrelementen 13, hier mehrere nach innen ragende Noppen des Kupplungselementes 7, festgehalten wird.

Wird sodann das Rohr 3, dem in der gezeigten Ausführung bereits ein Formring 9 aufgeschoben wurde, mit dem becherförmigen Rohrende 4 über das kugelförmige Rohrende 2 des Rohres 1 gestülpt, so wird nach dem Verschließen des Kupplungselementes 7 mit dem Formring 9 (hier durch ineinander Verdrehen) die Wirkverbindung hergestellt.
Der Formring 9 kann entweder über das kugelförmige Ende 2 geschoben und anschließend über die gesamte Rohrlänge bis zum becherförmigen Ende 4 transportiert werden, wo die oben beschriebene Wirkverbindung mit dem Kupplungselement 7 hergestellt wird, es ist aber auch möglich, den Formring 9 so auszugestalten, daß er über die Ausbuchtung 5 geschoben werden kann. Dies erspart den Transport über die gesamte Rohrlänge. Die Fixierung des Formringes 9 erfolgt bei dieser Ausbildungsform derart, daß am becherförmigen Rohrende 4 ein weiterer Stützring, der in seinen Ausbildungsmöglichkeiten jenem am kugelförmigen Rohrende 2 angeordneten entspricht, angeordnet ist, und der Formring 9 in diesen in einer Nut eingreift. Die Wirkverbindung wird also mit Hilfe dieser Formring-Stützring-Kombination hergestellt.
Der Formring 9 kann mit dem becherförmigen Rohrende 4 einstückig ausgebildet sein, beispielsweise indem er mit dem Rohr verschweißt ist oder bei einer eventuellen Ausbildung aus Kunststoff mit diesem in einem Arbeitsschritt hergestellt wird. Ebenso ist eine Verbindung des Formringes 9 mit dem becherförmigen Rohrende 4 mit Hilfe einer Rippen-Nut-Konstruktion möglich, bei welcher am becherförmigen Rohrende 4 mehrere Rippen angeordnet sind, welche in korrespondierende Nuten, die am Innendurchmesser des Formringes 9 angeordnet sind, eingreifen. Durch diese Konstruktion ist auch eine Verdrehsicherung gewährleistet.
Der Formring 9 ist seitengleich ausgebildet, woraus resultiert, daß es gleichgültig ist, in welcher Lage er auf das
Rohr aufgeschoben wird, was eine nicht unbedeutende Erleichterung darstellt. Die oben beschriebenen, nicht gezeigten möglichen Ausbildungen der Formring-Rohrverbindung weisen ebenfalls den Vorteil der seitengleichen
Ausbildung des Formringes auf. Dadurch, daß der Stützring 8 einerseits im Kupplungselement 7 festsitzt, anderseits satt am kugelförmigen Rohrende 2 anliegt, sind die
durch die geschlossene Kupplung miteinander verbundenen
Rohre 1 und 3 zueinander in dem Maße abwinkelbar, als der
Stützring 8 auf der Oberfläche des kugelförmigen Rohrendes 2 ungehindert verschoben werden kann.
In der Ausführungsform nach Fig.1 und Fig.2 der Rohrschnellkupplung wird die formschlüssige Verbindung durch
drei Kupplungssegmente 11 am Formring 9 und drei korrespondierende Kupplungssegmente 10 am Kupplungselement 7 in
Art eines Bajonettverschlusses mit drei Gewindegängen realisiert. Damit ist es bei dieser Kupplungsausführung ohne
weiteres möglich, für ein rasches Verlegen der Rohrleitungen das Verschließen der Kupplungen zu mechanisieren.
Bei der in Fig.3 gezeigten Ausführungsform ist es ebenfalls
möglich, das Kupplungselement 7 nachträglich aufzubringen,
da dessen Ring 18 im Innendurchmesser größer ist als der
Außendurchmesser des kugelförmigen Rohrendes.
Der Stützring 8 ist bei dieser Ausführung aus Metall mit
einem Querschlitz (ein offener Federdrahtring). Als Sperrelement 13 für den Stützring 8 dient hier eine in dem
Ring 18 des Kupplungselementes 7 angeordnete Ringnut. Nachdem das Kupplungselement 7 über das kugelförmige Rohrende 2
des Rohres 1 geschoben wurde, läßt sich der Stützring 8
in die Ringnut 13 drücken. Das Kuppeln der beiden Rohre 1
und 3 erfolgt hier in an sich bekannter Weise mittels des
Spannhebels 15, der sich am Anlenkpunkt 19 am Ring 18 abstützt, und das durch den Bolzen 17 drehbar befestigte, hakenförmige Kupplungselement 14 mit seiner Anlagefläche 16 gegen den Rand der ringförmigen Ausbuchtung 5 preßt.

Dadurch ist das Kupplungselement 7 über den Ring 18 mittels des Stützringes 8 mit dem kugelförmigen Rohrende 2 in Wirkverbindung.

Varianten der in den Fig.1 bis 3 beispielsweise gezeigten Rohrschnellkupplung können ganz oder teilweise aus Kunststoff hergestellt werden.

(Neue) Patentansprüche:

1. Rohrschnellkupplung aus einem oder mehreren Kupplungselementen, mit einem Dichtring, zum Verbinden eines als umschließenden, vorzugsweise becherförmigen Teil, und eines als umschlossenen, vorzugsweise kugelförmigen Teil ausgebildeten Rohrendes, dadurch gekennzeichnet, daß ein oder beide Kupplungselemente (7,9) einen größeren Kleinstdurchmesser aufweis(t)(en) als das den kleineren Größtaußendurchmesser aufweisende kugelförmige Rohrende (2) des Rohres (1) und somit über dieses schiebbar ist (sind), und daß wenigstens eines der Kupplungselemente (7,9) über einen Stützring (8,8'), dessen Kleinstdurchmesser kleiner als der Außendurchmesser des mit ihm zu versehenden kugelförmigen und/oder becherförmigen Rohrendes (2,4) und dessen Außendurchmesser größer als der Kleinstdurchmesser der(s) Kupplungselemente(s) (7,9) ist, im gekuppelten Zustand mit dem Rohrende (2,4) verbunden ist (sind).

2. Rohrschnellkupplung nach Anspruch 1, dadurch gekennzeichnet, daß das Kupplungselement (7), wie an sich bekannt, glockenförmig ausgebildet ist.

3. Rohrschnellkupplung nach Anspruch 1, dadurch gekennzeichnet, daß das Kupplungselement (9) ein Formring ist, der insbesondere seitengleich ausgebildet ist.

4. Rohrschnellkupplung nach den Ansprüchen 1 oder 3, dadurch gekennzeichnet, daß der Formring (9) mit dem becherförmigen Rohrende (4) über eine Rippen-Nut-Konstruktion verbunden ist. (Fig.5)

5. Rohrschnellkupplung nach den Ansprüchen 1 oder 3, dadurch gekennzeichnet, daß der Formring (9) mit dem becherförmigen Rohrende einstückig ausgebildet ist.

6. Rohrschnellkupplung nach Anspruch 2, dadurch gekennzeichnet, daß der Formring (9) an seinem äußeren Umfang Kupplungssegmente (11) aufweist, und daß die Kupplungssegmente (11) abstandsgleich angeordnet sind. (Fig.2)

7. Rohrschnellkupplung nach Anspruch 1, dadurch gekennzeichnet, daß das Kupplungselement (7) ein mit Haken (14) versehener Ring (18) ist. (Fig.3)

8. Rohrschnellkupplung nach Anspruch 1, dadurch gekennzeichnet, daß der Stützring (8) innerhalb des Kupplungselementes (7) mittels Sperrelementen (13) festgehalten ist.

9. Rohrschnellkupplung nach den Ansprüchen 1 oder 8, dadurch gekennzeichnet, daß der Stützring (8) mehrteilig ausgebildet ist.

10. Rohrschnellkupplung nach Anspruch 8, dadurch gekennzeichnet, daß das Sperrelement (13) als Nut ausgebildet ist.

FIG. 1

2|5

FIG. 2

FIG. 3

FIG.4

FIG.5